# EUROPEAN PATENT APPLICATION

(11) **EP 3 587 762 A2**
(43) Date of publication of application: **01.01.2020**
(21) Application number: 19182748.4
(22) Date of filing: 26.06.2019
(51) Int. Cl.: F02B 37/00, F02B 37/013, F02B 37/04, F02B 37/14, F02B 37/18, F02B 37/24, F02B 39/10, F02D 43/00, F02D 41/00, F01N 9/00, F01N 3/20

(54) **MULTI-STAGE TURBOCHARGER WITH BYPASS TO AN AFTERTREATMENT SYSTEM**

(30) Priority: 27.06.2018 US 201862690423 P
(71) Applicant: Borgwarner Inc., Auburn Hills, Michigan 48326 (US)
(72) Inventor: TAYLOR, Andrew John, Mirfield, WF14 0HB (GB); SLATER, Simon David, Wyke, BD12 9LS (GB)
(74) Representative: Peterreins Schley

(57) **Abstract**

A multi-stage turbocharger for a vehicle engine system is disclosed. The multi-stage turbocharger may comprise a first turbocharger having a high pressure turbine and a second turbocharger having a low pressure turbine. At least one of the first turbocharger and the second turbocharger may be a variable turbine geometry (VTG) turbocharger. The multi-stage turbocharger may further comprise a bypass duct having an inlet upstream of a first turbine wheel of the first turbocharger and an outlet downstream of a second turbine outlet of the second turbocharger, and the bypass duct may be configured to divert at least a fraction of the exhaust gas around both the high pressure turbine and the low pressure turbine. The multi-stage turbocharger may further comprise a bypass valve configured open and close to regulate a flow of the exhaust gas through the bypass duct.

## Description

### TECHNICAL FIELD

The present disclosure generally relates to multi-stage turbochargers and, more specifically, to multi-stage turbochargers having a bypass to divert exhaust gas to an aftertreatment system.

### BACKGROUND

Vehicle engine systems may include an internal combustion engine that combusts a fuel in the presence of air to produce an exhaust gas that is released into the atmosphere through a tail pipe of the vehicle. The exhaust gas may contain pollutants (e.g., nitrogen oxides (NOₓ), carbon monoxide (CO), particulate matter, hydrocarbons, etc.) which should be reduced to compliant levels prior to release of the exhaust gas into the atmosphere. Various emissions control strategies have been employed to reduce harmful emissions to levels that comply with government standards. For example, exhaust gas recirculation (EGR) is a NOₓ emission reduction technique commonly employed in diesel engines in which a portion of the exhaust gas is recirculated back to the engine combustion chamber. The recirculated exhaust is inert to combustion and acts as a heat absorber that reduces peak in-cylinder temperatures and the formation of NOₓ.

Other emission control strategies used in diesel engines rely on aftertreatment devices in the exhaust pipe that remove harmful emissions from the exhaust gas stream. Examples of such aftertreatment devices include diesel particulate filters (DPFs), as well as diesel oxidation catalysts (DOCs) and selective catalytic reduction (SCR) aftertreatment devices that are designed to convert the pollutants into more innocuous products. These aftertreatment devices may have an optimal or target operating temperature range below which the efficiency and performance of the device begins to diminish. For instance, many aftertreatment devices are associated with a catalyst light off temperature at which the catalyst of the aftertreatment device begins to show sufficient activity. To keep pollutant emissions at compliant levels, it is desirable to bring the aftertreatment device catalyst up to the optimal operating temperature range or catalyst light off temperature as soon as possible under cold start conditions (i.e., engine start up), as well as to maintain the optimal operating temperature range at the aftertreatment device during low load conditions (e.g., highway cruising). This may become increasingly important as emissions regulations increasingly focus on real drive cycle emissions tests that include cold start conditions and low load conditions.

The hot exhaust gases flowing through the exhaust pipe may be used as a thermal energy source to heat the aftertreatment device up to the target operating temperature range or maintain the aftertreatment device at the target operating temperature range. However, in turbocharged engine systems, the high thermal inertia of the turbocharger causes the turbocharger to act as a heat sink that absorbs thermal energy from the exhaust gas stream and reduces the temperature of the exhaust gas before the exhaust gas reaches the aftertreatment device. Consequently, in turbocharged engine systems, the aftertreatement device may experience a delay in reaching optimal operating temperatures or catalyst light off temperatures. The thermal inertia (and the heat stripping properties) of a turbocharger system may increase as the material mass of the turbocharger systems increases, so that an exhaust gas stream passing through a multiple-stage (e.g., two-stage) turbocharger or a variable turbine geometry (VTG) turbocharger may experience even greater thermal losses before reaching the aftertreatment device, resulting even more pronounced delays in heat transfer to the aftertreatment device. Such behavior may be adverse to compliance with emission standards that increasingly focus on real drive cycle emissions tests.

U.S. Patent Application Publication Number 2012/0036847 describes a bypass duct that diverts exhaust gas from an exhaust manifold to a delivery point just upstream of a DPF to bypass the turbocharger system and shorten the time to reach the catalyst light off temperature during cold start up. While effective, there is still a need for improved strategies to heat aftertreatment devices to optimal operating temperature ranges quickly in engine systems having multi-stage turbochargers and/or VTG turbochargers.

### SUMMARY

In accordance with one aspect of the present disclosure, a permanent multi-stage turbocharger for a vehicle engine system is disclosed. The vehicle engine system may include an internal combustion engine configured to generate an exhaust gas, an exhaust manifold configured to collect the exhaust gas from the internal combustion engine, and an exhaust pipe having an aftertreatment system for treating the exhaust gas. The multi-stage turbocharger may be configured to connect between the exhaust manifold and the exhaust pipe of the vehicle engine system. The multi-stage turbocharger may comprise a first turbocharger having a high pressure turbine including a first turbine inlet, a first turbine wheel, and a first turbine outlet, and a second turbocharger downstream of the first turbocharger and having a low pressure turbine including a second turbine inlet in fluid communication with the first turbine outlet, a second turbine wheel, and a second turbine outlet. As least one of the first turbocharger and the second turbocharger may be a variable turbine geometry (VTG) turbocharger having a plurality of adjustable vanes in the respective turbine inlet. The multi-stage turbocharger may further comprise a bypass duct having an inlet upstream of the first turbine wheel of the high pressure turbine, and an outlet downstream of the second turbine outlet of the low pressure turbine. The bypass duct may be configured to divert a fraction of the exhaust gas around both the high pressure turbine and the low pressure turbine. The multi-stage turbocharger may further comprise a bypass valve located at the inlet of the bypass duct and configured to open and close to regulate a flow of the exhaust gas through the bypass duct.

In accordance with another aspect of the present disclosure, a multi-stage turbocharger for a vehicle engine system is disclosed. The vehicle engine system may include an engine configured to generate an exhaust gas, an intake manifold for directing intake air to the engine, a supplemental electrical compressor configured to increase a boost pressure of the intake air, an exhaust manifold configured to collect the exhaust gas generated in the engine, and an exhaust pipe having and aftertreatment system for treating the exhaust gas. The multi-stage turbocharger may be configured to connect between the exhaust manifold and the exhaust pipe. The multi-stage turbocharger may comprise a first turbocharger having a high pressure turbine including a first turbine inlet, a first turbine wheel downstream of the first turbine inlet, and a first turbine outlet downstream of the first turbine wheel. The multi-stage turbocharger may further comprise a second turbocharger downstream of the first turbocharger and having a low pressure turbine including a second turbine inlet in fluid communication with the first turbine outlet, a second turbine wheel downstream of the second turbine inlet, and a second turbine outlet downstream of the second turbine wheel. In addition, the multi-stage turbocharger may further comprise a bypass duct having an inlet upstream of the first turbine wheel, and an outlet downstream of the second turbine outlet. Furthermore, the multi-stage turbocharger may further comprise a bypass valve located at the inlet of the bypass duct and configured to regulate a flow of the exhaust gas through the bypass duct, and a control system configured to open the bypass duct and start the supplemental electrical compressor when an operating temperature of the aftertreatment system is below a target operating temperature. The opening of the bypass valve may cause at least a portion of the exhaust gas to bypass both of the high pressure turbine and the low pressure turbine for delivery upstream of the aftertreatment system.

In accordance with another aspect of the present disclosure, a method for heating an exhaust gas aftertreatment system of a vehicle engine system having a multi-stage turbocharger is disclosed. The multi-stage turbocharger may include a first turbocharger having a high pressure turbine and second turbocharger having a low pressure turbine. At least one of the first turbocharger and the second turbocharger may be a variable turbine geometry (VTG) turbocharger having a plurality of adjustable vanes at a turbine inlet of the turbocharger. The method may comprise receiving a signal indicating that an operating temperature of the aftertreatment system is below a target operating temperature and, in response to the signal indicating that the operating temperature of the aftertreatment system is below the target operating temperature, sending a command to open a bypass valve to allow a portion of the exhaust gas to be diverted around the high pressure turbine and the low pressure turbine through a bypass duct. The bypass duct may have an inlet upstream of the first turbine wheel of the high pressure turbine, and an outlet downstream of the low pressure turbine and upstream of the aftertreatment system. The method may further comprise sending a command to at least partially close the adjustable vanes of the VTG turbocharger to increase a back pressure upstream of the high pressure turbine. The method may further comprise delivering the diverted exhaust gas to the aftertreatment system to increase an operating temperature of the aftertreatment system, and receiving a signal indicating that the operating temperature of the aftertreatment system has reached the target operating temperature. The method may further comprise sending a command to close the bypass valve in response to the signal indicating that the operating temperature of the aftertreatment system has reached the target temperature.

These and other aspects and features of the present disclosure will be more readily understood when read in conjunction with the accompanying drawings.

### BRIEF DESCRIPTION OF THE DRAWINGS

FIG. 1 is a schematic diagram of a vehicle engine system having a multi-stage turbocharger with a bypass duct to an aftertreatment system, in accordance with the present disclosure.
FIG. 2 is a cross-sectional view of the multi-stage turbocharger, constructed in accordance with the present disclosure.
FIG. 3 is cross-sectional view through a portion of the multi-stage turbocharger, illustrating a bypass valve that opens to the bypass duct, constructed in accordance with the present disclosure.
FIG. 4 is a cross-sectional view through another portion of the multi-stage turbocharger, illustrating the bypass valve that opens to the bypass duct, constructed in accordance with the present disclosure.
FIG. 5 is a perspective view of a portion of the multi-stage turbocharger, illustrating a bypass valve actuator involved in opening and closing the bypass valve, constructed in accordance with the present disclosure.
FIG. 6 is a schematic diagram of a control system for regulating the bypass valve and other features of the vehicle engine system, in accordance with the present disclosure.
FIG. 7 is a flowchart of a series of steps that may be involved in controlling the heating of the aftertreatment system as performed by and electronic control unit (ECU) of the control system, in accordance with a method of the present disclosure.

### DETAILED DESCRIPTION

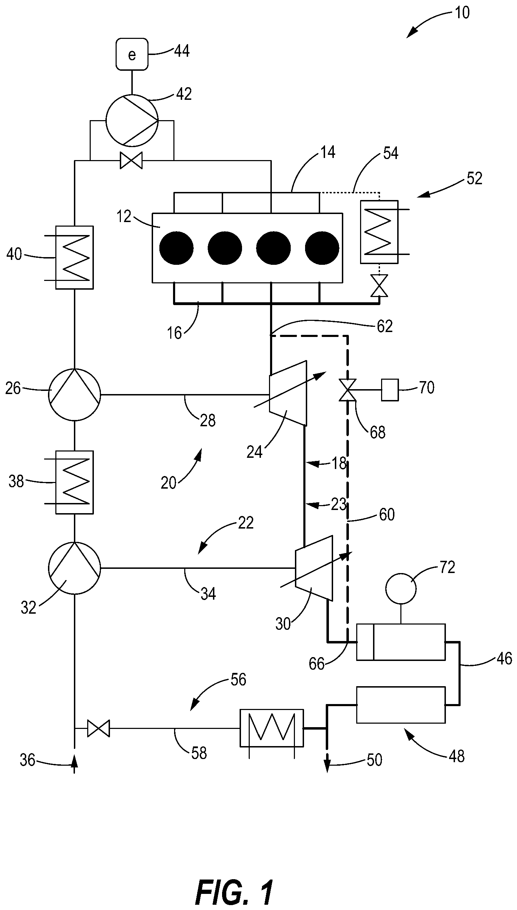

Referring now to the drawings, and with specific reference to FIG. 1, a vehicle engine system 10 is shown. The vehicle engine system 10 may be associated with a vehicle and may include an internal combustion engine 12 (e.g., a diesel engine). An intake manifold 14 may supply fuel and air to the combustion chambers of the engine 12 for combustion, and an exhaust manifold 16 may collect an exhaust gas generated in the engine 12 and direct the exhaust gas to a multi-stage turbocharger 18. The multi-stage turbocharger 18 may use the exhaust flow to increase the boost pressure of the intake air that is supplied to the engine 12, providing an increase the power density of the engine 12 by allowing more fuel to be combusted. The multi-stage turbocharger 18 may include two or more turbochargers in series to provide an enhancement in boost over a single stage turbocharger. Specifically, the multi-stage turbocharger 18 may include at least a first high pressure stage having a first turbocharger 20 and a second low pressure stage downstream of the high pressure stage and having a second turbocharger 22. At least one of the first turbocharger 20 and the second turbocharger 22 may be a variable turbine geometry (VTG) turbocharger, as explained further below. Although depicted as a two-stage turbocharger 23 in FIG. 1, it will be understood that the multi-stage turbocharger 18 may have more than two stages in alternative arrangements.

The first turbocharger 20 may include a high pressure turbine 24 rotatably coupled to a high pressure compressor 26 via a first shaft 28, and the second turbocharger 22 may include a low pressure turbine 30 rotatably coupled to a low pressure compressor 32 via a second shaft 34. Notably, the multi-stage turbocharger 18 disclosed herein may be a "permanent" multi-stage turbocharger in that the exhaust gas, once directed to the first turbocharger 20, must flow through all of the turbines of the multi-stage turbocharger 18. The flow of the engine's exhaust gas through the high pressure turbine 24 and the low pressure turbine 30 may drive the rotation of the turbines 24 and 30 which may, in turn, drive the rotation of the high pressure compressor 26 and the low pressure compressor 32 via the interconnecting first and second shafts 28 and 34, respectively. As a result, more intake air 36 is forced into the engine 12 through the intake manifold 14. An interstage charge air cooler 38 may cool the compressed intake air between the low pressure compressor 32 and the high pressure compressor 26, and a charge air cooler 40 may cool the compressed intake air downstream of the high pressure compressor 26 prior to its delivery to the engine 12 through the intake manifold 14. The vehicle engine system 10 may further include a supplemental electrical compressor 42 driven by an electric motor 44 which may further enhance the boost pressure of the intake air 36 under certain circumstances, such as during vehicle acceleration.

After passing through the high pressure and low pressure turbines 24 and 30, the exhaust gas may flow through an exhaust pipe 46 for treatment at an aftertreatment system 48 which may remove or chemically convert pollutants in the exhaust gas prior to release of the treated exhaust gas 50 into the atmosphere. The aftertreatment system 48 may include one or more exhaust gas treatment devices apparent to those with ordinary skill in the art such as, but not limited to, a diesel particulate filter (DPF), a diesel oxidation catalyst (DOC), a selective catalytic reduction (SCR) aftertreatment device, or a lean NOₓ trap (LNT). The aftertreatment system 48 may be located in the exhaust pipe 46 downstream of the multi-stage turbocharger 18, as shown. In addition, the vehicle engine system 10 may also include one or more exhaust gas recirculation (EGR) systems that recirculate exhaust gas released by the engine 12 back into the engine 12. The recirculated exhaust gas may absorb heat in the combustion chamber to reduce peak in-cylinder temperatures and the formation of NOₓ. For example, the vehicle engine system 10 may have a high pressure EGR system 52 that recirculates the exhaust gas from the exhaust manifold 16 back into the engine 12 via a recirculation conduit 54, as well as a low pressure EGR system 56 that recirculates exhaust gas from the exhaust pipe 46 back into the engine 12 via a recirculation conduit 58.

The aftertreatment system 48 may have a target operating temperature at which the aftertreatment system 48 exhibits optimal (or at least sufficient) activity in removing pollutants from the exhaust gas. The target operating temperature may be a temperature or a range of temperatures below which the performance of the aftertreatment system 48 diminishes, causing a rise in pollutant emissions. In some cases, the target operating temperature of the aftertreatment system 48 may be the catalyst light off temperature at which the catalyst(s) of the aftertreatment system 48 exhibit sufficient activity.

The high temperature exhaust gases flowing through the exhaust pipe 46 may provide thermal energy to heat the aftertreatment system 48 up to the target operating temperature under cold start conditions (engine start up), or to maintain the target operating temperature at the aftertreatment system 48 under low load conditions (e.g., highway cruising). However, the material construction and large mass of the turbines 24 and 30 of the multi-stage turbocharger 18may cause the turbines to behave as a heat sink, extracting thermal energy from the exhaust gases before the exhaust gases reach the downstream aftertreatment system 48. As such, the time required to heat the aftertreatment system 48 to its target operating temperature under cold start conditions may be delayed. Due to its larger mass, this delay is further exacerbated with the multi-stage turbocharger 18, which has multiple turbines, as compared to a single stage turbocharger.

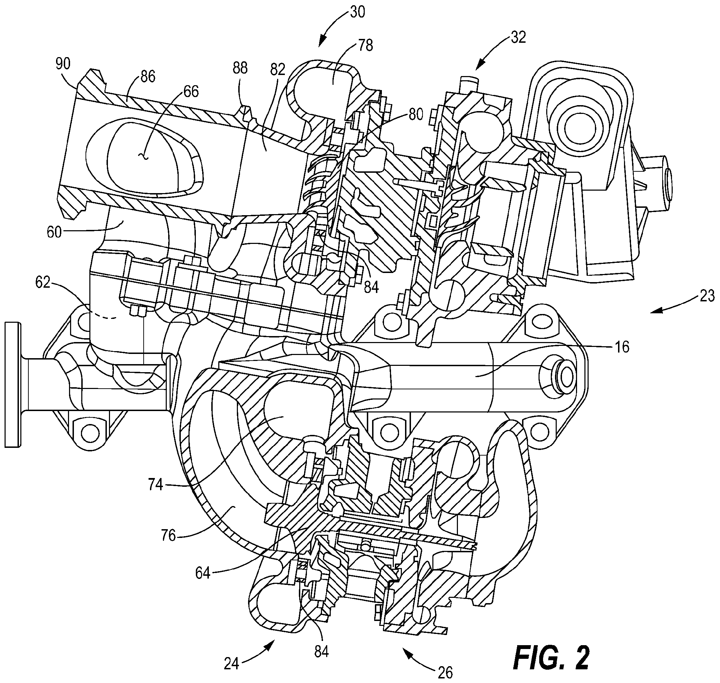

To avoid thermal energy losses in the exhaust gas, the vehicle engine system 10 may include a bypass for bypassing the exhaust gas around all of the turbines of the multi-stage turbocharger 18 for direct delivery upstream of the aftertreatment system 48. Bypassing the turbines may significantly reduce the delay in heating the aftertreatment system 48 up to its target operating temperature under cold start conditions. The bypass may include a bypass duct 60 having an inlet 62 upstream of a first turbine wheel 64 of the high pressure turbine 24, and an outlet 66 downstream of the low pressure turbine 30 and upstream of the aftertreatment system 48 (also see FIG. 2). A bypass valve 68 located at or near the inlet 62 of the bypass duct 60 and may open and close to regulate a flow of the exhaust gas through the bypass duct 60. The bypass valve 68 may be operatively connected to an electric, pneumatic, or vacuum actuator 70 that may actuate the opening and closing of the bypass valve 68 depending on the operating temperature of the aftertreatment system 48 (see further details below). A temperature sensor 72 associated with the aftertreatment system 48 may monitor the operating temperature of the aftertreatment system 48. When the actual operating temperature of the aftertreatment system 48 is below the target operating temperature, the actuator 70 may open the bypass valve 68 to enhance the rate of heating of the aftertreatment system 48 by the hot exhaust gases.

Turning now to FIG. 2, the two-stage turbocharger 23 is shown in more detail. The two-stage turbocharger 23 may be configured to connect between the exhaust manifold 16 and the exhaust pipe 46 of the engine system 10. The high pressure turbine 24 may include a first turbine inlet 74, a first turbine wheel 64 downstream of the first turbine inlet 74, and a first turbine outlet 76 downstream of the first turbine wheel 64. In the embodiment of FIG. 2, the first turbine inlet 74 is integrally formed with a portion of the exhaust manifold 16 as a single casting. However, in alternative arrangements, the first turbine inlet 74 and the exhaust manifold 16 may be separate units. The low pressure turbine 30 may include a second turbine inlet 78 in fluid communication with and downstream of the first turbine outlet 76, a second turbine wheel 80 downstream of the second turbine inlet 78, and a second turbine outlet 82 downstream of the second turbine wheel 80. In addition, one or both of the high pressure turbine 24 and the low pressure turbine 30 may have a plurality of adjustable vanes 84 at its respective turbine inlet 74 and/or 78 which open and close by various degrees to alter the flow path and the boost pressure of the turbocharger under different operating conditions. As such, one or both of the first turbocharger 20 and the second turbocharger 22 may be a variable turbine geometry (VTG) turbocharger. As explained further below, the adjustable vanes 84 may at least partially close when exhaust gas is diverted through the bypass duct 60 to increase the back pressure upstream of the first turbine wheel 64 and promote the flow of the exhaust gas through the bypass duct 60.

As shown in FIG. 2, the bypass duct 60 may extend from a position upstream of the high pressure turbine 24 to a position downstream of the low pressure turbine 30. Accordingly, the exhaust gas flowing through the bypass duct 60 may bypass both of the high pressure turbine 24 and the low pressure turbine 30. In alternative arrangements, such as when the multi-stage turbocharger 18 has more than two stages, the bypass duct 60 may extend from a position upstream of the most upstream turbine in the series to a position downstream of the most downstream turbine in the series so that all of the turbines are bypassed. The inlet 62 of the bypass duct 60 may be located upstream of the first turbine wheel 64, such as at the integrally formed first turbine inlet 74 and exhaust manifold 16, as shown in FIGs. 2-3. However, if the first turbine inlet 74 and the exhaust manifold 16 are separate units, the inlet 62 may be located at either of the first turbine inlet 74 or the exhaust manifold 16.

The outlet 66 of the bypass duct 60 may be located along an adapter pipe 86 that connects the second turbine outlet 82 to the exhaust pipe 46 (see FIG. 2). The adapter pipe 86 may have a first end 88 connected to the second turbine outlet 82 and a second end 90 configured to connect to the exhaust pipe 46. Alternatively, the adaptor pipe 86 may be integrally formed with the second turbine outlet 82. In other arrangements, the second turbine outlet 82 may connect directly to the exhaust pipe 46, and the outlet 66 of the bypass duct 60 may be located at a position along the exhaust pipe 46.

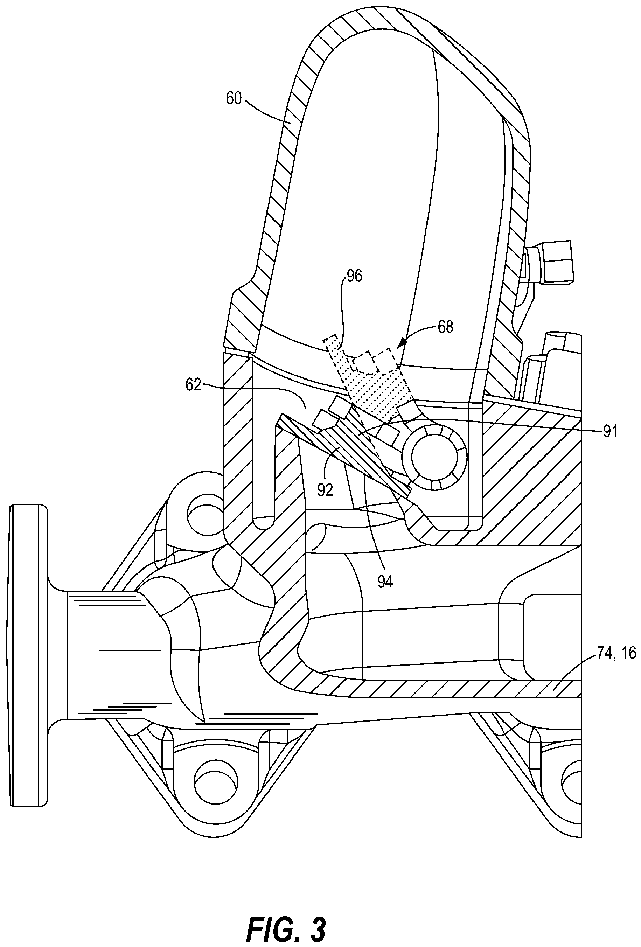

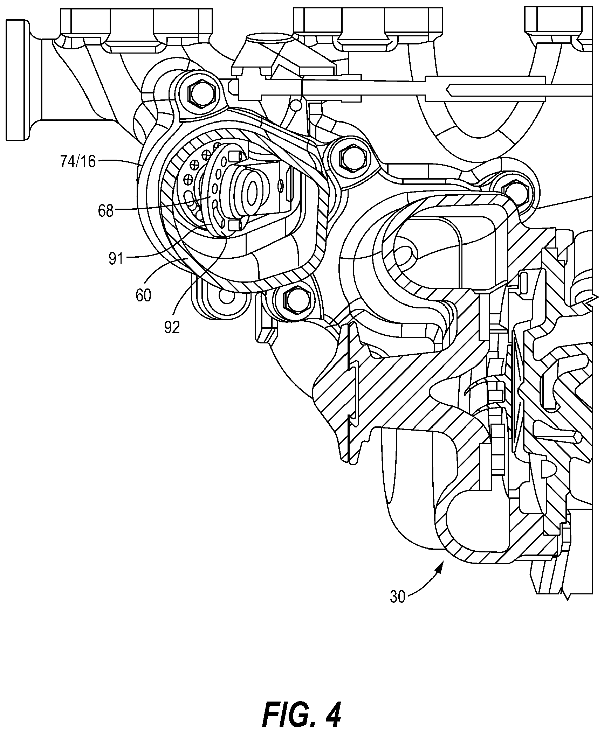

Referring to FIGs. 3-4, the bypass valve 68 may be positioned at the inlet 62 of the bypass duct 60. For example, the bypass valve 68 may be positioned at the integrally formed first turbine inlet 74 and exhaust manifold 16, as shown. In other arrangements, the bypass valve 68 may be located within the bypass duct 60. The bypass valve 68 may be a flap valve 91 that includes a flap plate 92 which pivots between a closed position 94 to block the flow of the exhaust gas through the bypass duct 60, and an open position 96 to allow the flow of the exhaust gas through the bypass duct 60 (see FIG. 3). Alternatively, the bypass valve 68 may be another type of valve apparent to those with ordinary skill in the art, such as a rotary valve or a poppet valve.

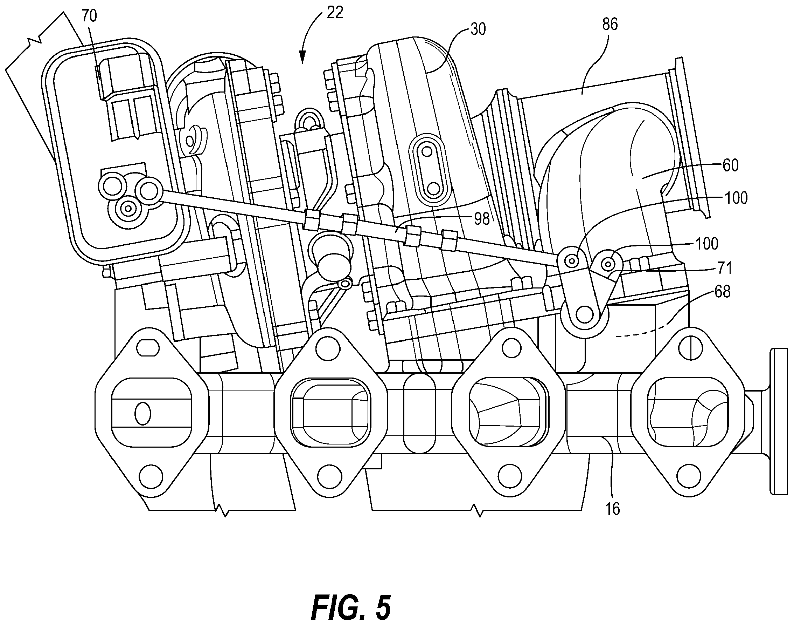

Turning to FIG. 5, the actuator 70 for the bypass valve 68 is shown. The actuator 70 may be connected to a valve lever 71 via an actuation rod 98 in order to shift the valve lever 71 between positions to actuate the opening or closing of the bypass valve 68. As explained in further detail below, the actuator 70 may be controlled by an electronic control unit (ECU) 102 of the vehicle engine system 10 according to the operating temperature of the aftertreatment system 48.

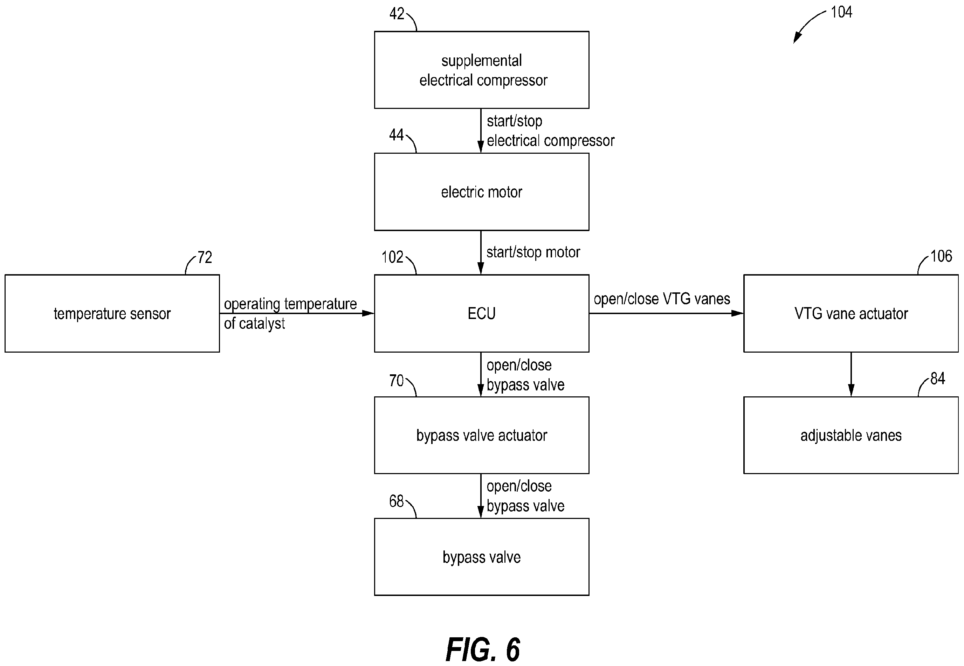

A control system 104 for regulating the bypass valve 68 and other functions of the vehicle engine system 10 is shown in FIG. 6. The control system 104 may include the ECU 102 which may be in electrical communication with the temperature sensor 72, the bypass valve actuator 70, the electric motor 44 that is associated with the supplemental electrical compressor 42, and one or more VTG vane actuators 106 that actuate the opening and closing of the adjustable vanes 84. The ECU 102 may receive signals from the temperature sensor 72 indicating the actual operating temperature at the aftertreatment system 48. Based on the signals received from the temperature sensor 72, the ECU 102 may control the bypass valve actuator 70, the VTG vane actuator 106, and the electric motor 44 accordingly. Specifically, the ECU 102 may transmit commands to the actuator 70 to open or close the bypass valve 68. The ECU 102 may also transmit commands to the VTG vane actuator 106 to open or close the adjustable vanes 84. For example, the ECU 102 may transmit a command requesting at least partial closing of the adjustable vanes 84 when the bypass valve 68 is opened in order to increase the back pressure upstream of the first turbine wheel 64 and promote the flow of the exhaust gas through the bypass duct 60. Moreover, closing of the adjustable vanes 84 may also advantageously increase the boost pressure of the turbocharger 18 to compensate for at least some of the drop in boost pressure that occurs as exhaust gas is diverted through the bypass duct 60. In addition, the ECU 102 may transmit commands to start or stop the electrical motor 44 which may, in turn, start or stop the supplemental electrical compressor 42. The ECU 102 may start the electrical motor 44 (and the electrical compressor 42) when the bypass valve 68 is opened in to provide supplemental boost pressure as boost pressure may be reduced as exhaust gas is diverted through the bypass duct 60.

### Industrial Applicability

In general, the teachings of the present disclosure may find applicability in many industries including, but not limited to, automotive industries. More specifically, the teachings of the present disclosure may be applicable to any industry using multi-stage and/or VTG turbocharger systems with an exhaust gas aftertreatment system.

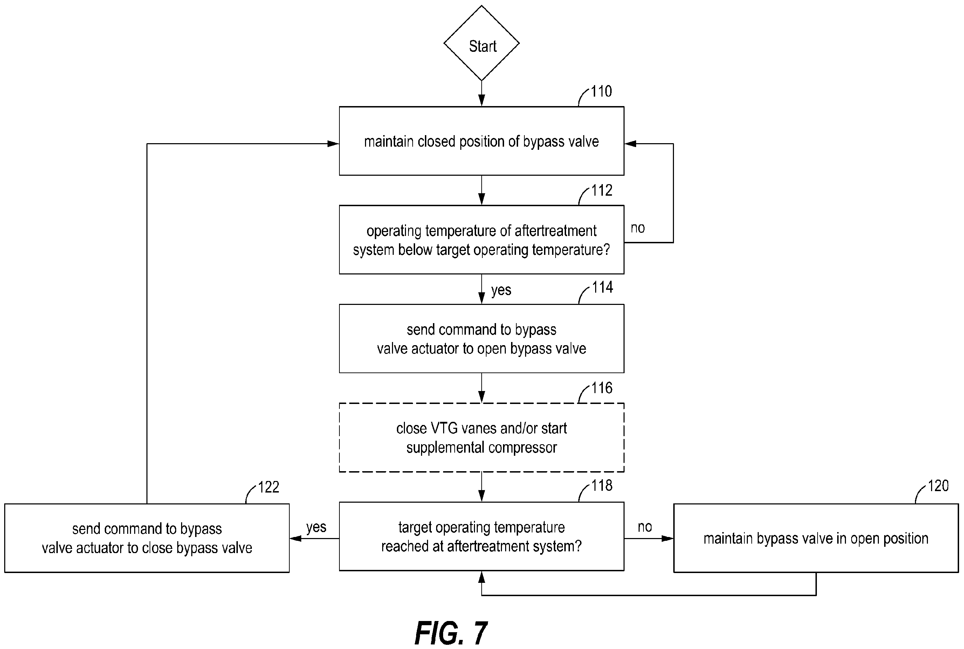

FIG. 7 shows a method that may be involved in controlling the heating of the aftertreatment system 48 to its target temperature as implemented by the ECU 102 of the control system 104. At a first block 110, the ECU 102 may maintain the bypass valve 68 in the closed position by transmitting a command to the actuator 70 to close the bypass valve 68 so that all of the exhaust gas flows through the turbines 24 and 30 of the multi-stage turbocharger 18. At a block 112, the ECU 102 may await a signal from the temperature sensor 72 indicating that the actual operating temperature of the aftertreatment system 48 is below the target operating temperature. For example, the actual operating temperature may be below the target operating temperature under cold start conditions, or the actual operating temperature may fall below the target operating temperature under low load conditions such as during extended periods of highway cruising.

If the operating temperature of the aftertreatment system 48 is not below the target operating temperature, the ECU 102 may maintain the bypass valve 68 in the closed position (block 110). If, on the other hand, a signal is received indicating that the operating temperature is below the target operating temperature, the ECU 102 may respond to the signal by transmitting a command to the actuator 70 to at least partially open the bypass valve 68 (block 114), so that at least a portion of the exhaust gas flows through the bypass duct 60 and bypasses the turbines 24 and 30 for direct delivery upstream of the aftertreatment system 48. Optionally, the ECU 102 may also respond to the signal indicating that the operating temperature is below the target temperature by sending commands to close the adjustable vanes 84 and/or to start the supplemental electrical compressor 42 (block 116). Specifically, the ECU 102 may transmit a command to the VTG vane actuator 106 to cause the adjustable vanes 84 to at least partially close. Closing of the adjustable vanes 84 may promote the flow of the exhaust gas through the bypass duct 60 by increasing the back pressure in the first turbine inlet 74 and the exhaust manifold 16, while also increasing the boost pressure supplied by the turbocharger 18 as some of the boost pressure may be lost while exhaust gas is diverted through the bypass duct 60. In addition, the ECU 102 may transmit a command to start the electric motor 44, causing the supplemental electrical compressor 42 to switch on. Starting the supplemental electrical compressor 42 may supplement at least some of the boost pressure that may be lost while exhaust gas is diverted through the bypass duct 60.

At a block 118, the ECU 102 may await a signal from the temperature sensor 72 indicating that the target operating temperature has been reached at the aftertreatment system 48. If the operating temperature remains below the target operating temperature, the ECU 102 may maintain the bypass valve 68 in the open position to continue heating the aftertreatment system 48 with the bypassed exhaust gas (block 120). If a signal is received by the ECU 102 indicating that the aftertreatment system 48 has reached its target operating temperature, it may respond to the signal by transmitting a command to the actuator 70 to close the bypass valve 68 (block 122). The closure of the bypass valve 68 may allow the exhaust gas to flow through the turbines 24 and 30 normally. The ECU 102 may also command the opening of the adjustable vanes 84 and/or the switching off of the electrical compressor 42 via the electric motor 44. However, the position of the adjustable vanes 84 and the operation of the supplemental electrical compressor 42 may be governed based on a variety of other vehicle operation conditions as well.

The present disclosure provides a bypass system for bypassing engine exhaust gas around all of the turbines of a permanent, multi-stage turbocharger to increase the heating rate of an exhaust gas aftertreatment system. The bypass system includes a bypass duct through which the exhaust gas flows when an operating temperature of the aftertreatment system is below a target operating temperature (e.g., a catalyst light off temperature). The bypassed exhaust gas is released from the duct at a position upstream of the aftertreament system, thereby avoiding any thermal losses in the exhaust gas that may occur in the turbines and increasing the heating rate of the aftertreatment system by the exhaust gas. It is expected that the technology disclosed herein may find wide industrial applicability in a wide range of areas such as, but not limited to, automotive applications.

## Claims

1. A permanent multi-stage turbocharger for a vehicle engine system, the vehicle engine system including an internal combustion engine configured to generate an exhaust gas, an exhaust manifold configured to collect the exhaust gas from the internal combustion engine, and an exhaust pipe having an aftertreatment system for treating the exhaust gas, the multi-stage turbocharger being configured to connect between the exhaust manifold and the exhaust pipe of the vehicle engine system, the multi-stage turbocharger comprising:
a first turbocharger having a high pressure turbine including a first turbine inlet, a first turbine wheel, and a first turbine outlet;
a second turbocharger downstream of the first turbocharger and having a low pressure turbine including a second turbine inlet in fluid communication with the first turbine outlet, a second turbine wheel, and a second turbine outlet, at least one of the first turbocharger and the second turbocharger being a variable turbine geometry (VTG) turbocharger having a plurality of adjustable vanes in the respective turbine inlet;
a bypass duct having an inlet upstream of the first turbine wheel of the high pressure turbine and an outlet downstream of the second turbine outlet of the low pressure turbine, the bypass duct being configured to divert at least a fraction of the exhaust gas around both the high pressure turbine and the low pressure turbine; and
a bypass valve located at the inlet of the bypass duct and configured to open and close to regulate a flow of the exhaust gas through the bypass duct.

2. The permanent multi-stage turbocharger of claim 1, wherein the plurality of adjustable vanes are configured to at least partially close while the exhaust gas is diverted through the bypass duct.

3. The permanent multi-stage turbocharger of claim 2, wherein the closing of the adjustable vanes while the exhaust gas is diverted through the bypass duct increases a back pressure upstream of the first turbine wheel to promote a flow of the exhaust gas through the bypass duct.

4. The permanent multi-stage turbocharger of claim 1, further comprising an adapter pipe having a first end connected to the second turbine outlet and a second end configured to connect to the exhaust pipe, the outlet of the of the bypass duct being located along the adapter pipe so that the diverted exhaust gas is directed into to the adapter pipe downstream of the second turbine outlet.

5. The permanent multi-stage turbocharger of claim 1, wherein the outlet of the bypass duct is located upstream of the aftertreatment system when the multi-stage turbocharger is connected between the exhaust manifold and the exhaust pipe.

6. The permanent multi-stage turbocharger of claim 1, wherein the first turbine inlet is integrally formed with at least a portion of the exhaust manifold, and wherein the bypass valve is located at the integrally formed first turbine inlet and exhaust manifold.

7. The permanent multi-stage turbocharger of claim 1, wherein the bypass valve is a flap valve.

8. The permanent multi-stage turbocharger of claim 1, wherein both of the first and the second turbocharger are variable turbine geometry (VTG) turbochargers.

9. The permanent multi-stage turbocharger of claim 1, further comprising an actuator configured to actuate an opening or a closing of the bypass valve.

10. The permanent multi-stage turbocharger of claim 9, wherein the actuator is an electric, pneumatic, or vacuum actuator.

11. A multi-stage turbocharger for a vehicle engine system, the vehicle engine system including an engine configured to generate an exhaust gas, an intake manifold for directing intake air to the engine, a supplemental electrical compressor configured to increase a boost pressure of the intake air, an exhaust manifold configured to collect the exhaust gas generated in the engine, and an exhaust pipe having an aftertreatment system for treating the exhaust gas, the multi-stage turbocharger being configured to connect between the exhaust manifold and the exhaust pipe, the multi-stage turbocharger comprising:
a first turbocharger having a high pressure turbine including a first turbine inlet, a first turbine wheel downstream of the first turbine inlet, and a first turbine outlet downstream of the first turbine wheel;
a second turbocharger downstream of the first turbocharger and having a low pressure turbine including a second turbine inlet in fluid communication with the first turbine outlet, a second turbine wheel downstream of the second turbine inlet, and a second turbine outlet downstream of the second turbine wheel;
a bypass duct having an inlet upstream of the first turbine wheel of the high pressure turbine and an outlet downstream of the second turbine outlet of the low pressure turbine;
a bypass valve located at the inlet of the bypass duct and configured to regulate a flow of the exhaust gas through the bypass duct; and
a control system configured to open the bypass valve and start the supplemental electrical compressor when the multi-stage turbocharger is connected to the exhaust manifold and the exhaust pipe when an operating temperature of the aftertreatment system is below a target operating temperature, the opening of the bypass valve causing at least a portion of the exhaust gas to bypass both of the high pressure turbine and the low pressure turbine for delivery upstream of the aftertreatment system.

12. The multi-stage turbocharger of claim 11, wherein at least one of the first turbocharger and the second turbocharger is a variable turbine geometry (VTG) turbocharger having a plurality of adjustable vanes at the respective turbine inlet.

13. The multi-stage turbocharger of claim 12, wherein the control system is further configured to at least partially close the adjustable vanes when the operating temperature of the aftertreatment system is below the target operating temperature, and wherein the at least partial closing of the adjustable vanes increases a back pressure upstream of the first turbine wheel to promote a flow of the exhaust gas through the bypass duct.

14. The multi-stage turbocharger of claim 13, wherein the control system includes an engine control unit (ECU) in electrical communication with a temperature sensor that monitors the operating temperature of the aftertreatment system.

15. The multi-stage turbocharger of claim 14, further comprising an actuator configured to actuate the opening and closing of the bypass valve, and wherein the ECU is configured to transmit a command to the actuator to open the bypass valve when the multi-stage turbocharger is connected to the exhaust manifold and the exhaust pipe and when the operating temperature of the aftertreatment system is below the target operating temperature.
